# EUROPÄISCHE PATENTSCHRIFT

(11) **EP 4 406 718 B1**
(45) Veröffentlichungstag und Bekanntmachung des Hinweises auf die Patenterteilung: **09.07.2025**
(21) Anmeldenummer: 24151089.0
(22) Anmeldetag: 10.01.2024
(51) Int. Cl.: B29C 45/18, B29C 48/285, B29C 48/25, B29C 45/74, B29B 7/60, B29B 7/72

(54) **MATERIALFÖRDERVORRICHTUNG**
MATERIAL CONVEYING DEVICE
DISPOSITIF DE TRANSPORT DE MATÉRIAU

(30) Priorität: 26.01.2023 AT 500382023
(43) Veröffentlichungstag der Anmeldung: 31.07.2024
(73) Patentinhaber: ACH Solution GmbH, 4652 Fischlham (AT)
(72) Erfinder: Hefner, Christian, 4652 Fischlham (AT); Wiesbauer, Erwin, 4654 Bad Wimsbach-Neydharting (AT)
(74) Vertreter: Babeluk Patentanwälte GmbH

(56) Entgegenhaltungen:
- EP-A2- 0 286 972
- EP-A2- 0 470 510
- EP-A2- 3 332 940

## Beschreibung

Die Erfindung betrifft eine Materialfördervorrichtung zum Beschicken zumindest einer Spritzgieß- und/oder Extrudiereinheit mit einem nicht freifließendem oder zähfließenden Fördermaterial, mit einem relativ zu einer Konsole um eine Drehachse drehbaren Einfülltrichter und einer entlang einer Mantelinnenfläche des Einfülltrichters drehbar in einem Schneckenschacht der Konsole angeordneten Förderschnecke, welche ausgebildet ist um das Fördermaterial vom Einfülltrichter zu einem Austritt zu fördern, wobei der Schneckenschacht mit einem Trichterausgang des Einfülltrichters verbunden ist, und wobei der Einfülltrichter und die Förderschnecke über zumindest eine Antriebsvorrichtung antreibbar sind, wobei der Einfülltrichter in Abhängigkeit zumindest eines Betriebsparameters der Materialfördervorrichtung betreibbar ist. Weiters betrifft die Erfindung ein Verfahren zum Beschicken zumindest einer Spritzgieß- und/oder Extrudiereinheit mit einem nicht freifließendem oder zähfließenden Material, mit einer Materialfördervorrichtung mit einem rotierbaren Einfülltrichter mit einem um eine Rotrationsachse drehbaren und einer entlang einer Mantelinnenfläche des Einfülltrichters angeordneten Förderschnecke, welche drehbar gelagert ist, wobei der Einfülltrichter und die Förderschnecke über zumindest eine Antriebsvorrichtung angetrieben werden, wobei der Einfülltrichter in Abhängigkeit zumindest eines Betriebsparameters angetrieben wird und die Drehbewegung vermindert oder angehalten wird, wenn ein Grenzwert des Betriebsparameters erreicht oder überschritten wird.

Materialfördervorrichtung in der genannten Art mit rotierendem kegelförmigen Einfülltrichter und einer entlang einer Mantellinie drehbar gelagerten Förderschnecke sind aus den Druckschriften EP 0 286 972 A2, EP 0 470 510 A2, EP 0 687 543 A2, EP 1 317 009 A2 und WO 2014/198 503 A1 bekannt.

Bei der EP 0 470 510 A2 ist im Bereich der Mündung der Förderschnecke ein Druckmesssensor zur Regelung der Drehzahl der Förderschnecke angeordnet. Eine ähnliche Anordnung ist aus der EP 3 332 940 A1 bekannt.

Die DE 10 2019 115 122 A1 beschreibt eine Materialfördervorrichtung zum Beschicken einer Spritzgieß- und/oder Extrudereinheit mit einem relativ zu einer Konsole um eine Drehachse drehbar gelagerten Einfülltrichter und einer entlang einer Mantelinnenfläche des Einfülltrichters drehbar in einem Schneckenschacht der Konsole angeordneten Förderschnecke. Der Schneckenschacht ist mit dem Trichterausgang des Einfülltrichters verbunden. Der Einfülltrichter ist in Abhängigkeit des Antriebsdrehmomentes des Einfülltrichters betreibbar.

Insbesondere bei härteren Materialien kann es zu Unregelmäßigkeiten bei der Materialförderung und somit hohen Belastungen der mechanischen Komponenten kommen

Aufgabe der Erfindung ist es, eine konstante Ausförderung zu erreichen.

Erfindungsgemäß wird dies bei einer Materialfördervorrichtung der eingangs genannten Art dadurch erreicht, dass als zumindest ein Betriebsparameter ein Antriebsdrehmoment der Förderschnecke gewählt wird, wobei vorzugsweise das Antriebsdrehmoment durch zumindest einen im Antriebsweg der Förderschnecke angeordneten Drehmomentaufnehmer ermittelt wird.

Insbesondere bei härterem Fördermaterial kann es zu Blockaden in der Förderschnecke oder am Austritt der Materialfördervorrichtung kommen. Dies bewirkt einen Anstieg zumindest eines Betriebsparameters, beispielsweise des Förderdruckes und/oder des Drehmomentes der Förderschnecke oder des Einfülltrichters, wodurch es zu stärkeren Belastungen der mechanischen und elektrischen Komponenten der Materialfördervorrichtung kommen kann. Durch Verminderung der Drehzahl des Einfülltrichters oder Anhalten des Antriebs des Einfülltrichters wird die Materialzufuhr verringert und die Belastung reduziert. Erst bei Erreichen eines Normalwertes des Betriebsparameters wird die Drehzahl des Einfülltrichters wieder erhöht bzw. der Antrieb des Einfülltrichters wieder gestartet.

Zusätzlich kann auch die Drehzahl der Förderschnecke verringert werden.

Gemäß einer Ausführung der Erfindung kann die Verringerung der Drehzahl bzw. das Anhalten des Antriebes des Einfülltrichters durch eine im Antriebsstrang zwischen Antriebsvorrichtung und Einfülltrichter angeordnete Schaltkupplung oder Rutschkupplung erfolgen, welche die Antriebsverbindung zum Einfülltrichter unterbricht, wenn der Grenzwert des Betriebsparameters erreicht oder überschritten wird.

Zumindest ein weiterer Betriebsparameter kann ein Antriebsmoment des Einfülltrichters sein. Günstigerweise ist das Antriebsdrehmoment durch zumindest einen im Antriebsweg des Einfülltrichters angeordneten Drehmomentaufnehmer ermittelbar.

Alternativ oder zusätzlich kann vorgesehen sein, dass zumindest ein Betriebsparameter eine Stromaufnahme der durch einen Elektromotor gebildeten Antriebsvorrichtung der Förderschnecke ist, wobei vorzugsweise die Stromaufnahme durch eine Auswerteeinrichtung ermittelbar ist.

Weiters kann - alternativ oder zusätzlich - im Rahmen der Erfindung vorgesehen sein, dass zumindest ein Betriebsparameter ein Förderdruck der Materialfördervorrichtung ist, wobei vorzugsweise der Förderdruck durch einen im Bereich des Austrittes angeordneten Druckaufnehmer ermittelbar ist.

Eine Ausführungsvariante der Erfindung sieht vor, dass die Förderschnecke über eine erste Antriebsvorrichtung und der Einfülltrichter über eine zweite Antriebsvorrichtung antreibbar sind, wobei vorzugsweise zumindest eine Antriebsvorrichtung durch einen drehzahlregelbaren Elektromotor gebildet ist.

Vorzugsweise weist die Materialfördervorrichtung zumindest eine elektronische Steuereinheit auf, welche ausgebildet ist, um zumindest eine Antriebsvorrichtung und/oder zumindest eine Wellenkupplung im Antriebsstrang zwischen Antriebsvorrichtung und Förderschnecke und/oder zwischen Antriebsvorrichtung und Einfülltrichter zu steuern.

Vorteilhafterweise weist die Materialfördervorrichtung eine Speichereinrichtung zur Speicherung des definierten Grenzwerts des Betriebsparameters und eine Vergleichs- und Auswerteeinrichtung auf, um den aktuellen Betriebsparameter mit dem definierten Betriebsparameter zu vergleichen, wobei vorzugsweise die Speichereinrichtung und/oder die Vergleichs- und Auswerteeinrichtung in die elektronische Steuereinheit integriert ist/sind.

Die elektronische Steuereinheit ist günstigerweise ausgebildet, um den Antrieb des Einfülltrichters zu vermindern oder zu unterbrechen, wenn der definierte Grenzwert des Betriebsparameters erreicht oder überschritten wird.

Im Rahmen der Erfindung ist weiters vorgesehen, dass in den Schneckenschacht zumindest ein Medienzuführkanal einmündet, wobei vorzugsweise die Mündung des Medienzuführkanals in den Schneckenschacht zwischen dem Trichterausgang und einem dem Austritt zugewandten Ende der Förderschnecke angeordnet ist. Über den Medienzuführkanal kann ein insbesondere flüssiges, teigiges oder rieselfähiges Medium - beispielsweise Vernetzer; Silikonöl und/oder Farbmaterial - dem nicht freifließendem oder zähfließenden Fördermaterial zugeführt werden. Um eine möglichst homogene Vermischung des nicht freifließendem oder zähfließenden Materials mit dem Medium zu erreichen, ist es vorteilhaft, wenn der Förderschnecke und/oder stromabwärts der Förderschnecke zumindest eine Mischvorrichtung angeordnet ist, wobei vorzugsweise die Mischvorrichtung im Schneckenschacht angeordnet ist.

Zur Lösung der gestellten Aufgabe ist erfindungsgemäß ein Verfahren vorgesehen, welches vorsieht, dass als zumindest ein Betriebsparameter ein Antriebsdrehmoment der Förderschnecke gewählt wird, wobei vorzugsweise das Antriebsdrehmoment durch zumindest einen im Antriebsweg der Förderschnecke angeordneten Drehmomentaufnehmer ermittelt wird.

Vorzugsweise wird der Grenzwert des Betriebsparameters vordefiniert und in einem Speichermedium abgespeichert, ein aktueller Betriebsparameter ermittelt und mit dem vordefinierten Grenzwert des Betriebsparameters verglichen, und dass zumindest eine Antriebsvorrichtung des Einfülltrichters vermindert oder gestoppt wird, wenn der aktuelle Betriebsparameter mindestens dem Grenzwert des Betriebsparameters entspricht.

Gemäß einer Ausführung der Erfindung ist vorgesehen, dass als zumindest ein Betriebsparameter weiters ein Antriebsmoment des Einfülltrichters gewählt wird, wobei vorzugsweise das Antriebsdrehmoment durch zumindest einen im Antriebsweg des Einfülltrichter angeordneten Drehmomentaufnehmer ermittelt wird.

Alternativ oder zusätzlich kann vorgesehen sein, dass als zumindest ein Betriebsparameter ein Förderdruck im Bereich des Austrittes gewählt wird, wobei vorzugsweise der Förderdruck durch einen im Bereich des Austrittes angeordneten Druckaufnehmer gemessen wird.

Weiters kann - alternativ oder zusätzlich - vorgesehen sein, dass als zumindest ein Betriebsparameter ein Aufnahmestrom der Antriebsvorrichtung der Förderschnecke gewählt wird, wobei vorzugsweise der Aufnahmestrom durch eine Auswerteeinrichtung erfasst wird.

Die Erfindung wird im Folgenden anhand der in den Figuren gezeigten nicht einschränkenden Ausführungsbeispielen näher erläutert. Darin zeigen schematisch:
- Fig. 1: eine erfindungsgemäße Materialfördervorrichtung in einem Längsschnitt gemäß der Linie I - I in Fig. 2;
- Fig. 2: die Materialfördervorrichtung in einer Seitenansicht;
- Fig. 3: ein Detail der Materialfördervorrichtung in einer Ausführungsvariante;
- Fig. 4: ein Detail der Materialfördervorrichtung in einer weiteren Ausführungsvariante;
- Fig. 5: das erfindungsgemäße Verfahren in einer ersten Ausführungsvariante;
- Fig. 6: das erfindungsgemäße Verfahren in einer zweiten Ausführungsvariante; und
- Fig. 7: das erfindungsgemäße Verfahren in einer dritten Ausführungsvariante.

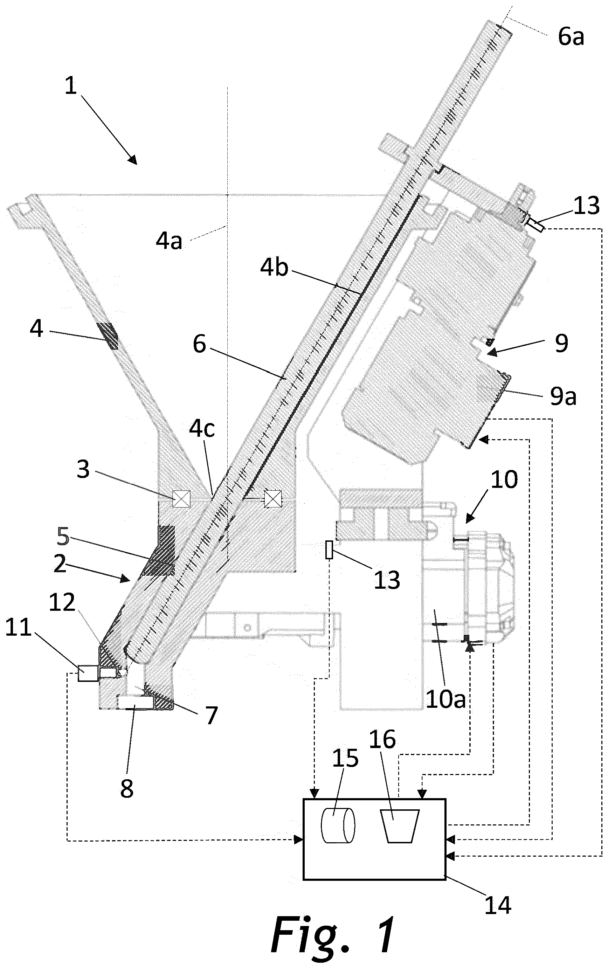

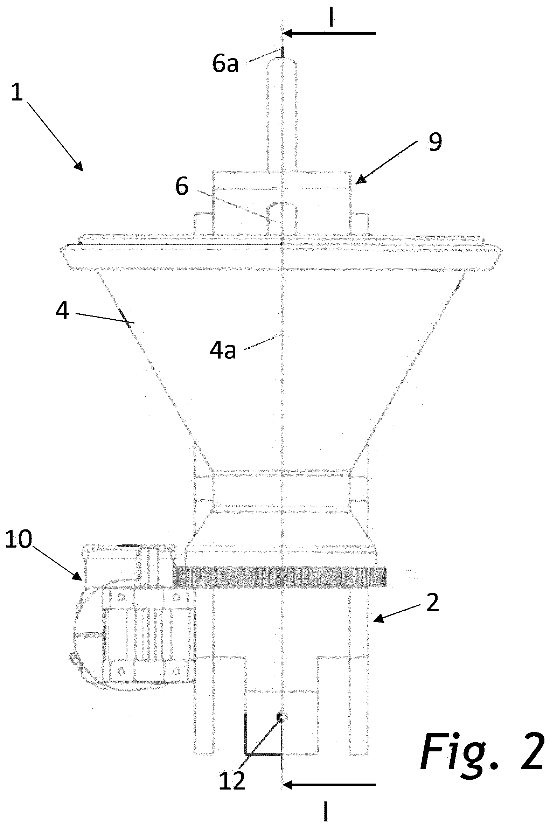

Die Fig. 1 und Fig. 2 zeigen eine erfindungsgemäße Materialfördervorrichtung 1 zum geregelten Zuführen eines nicht freifließendem oder zähfließenden, insbesondere plastifizierbaren Material, beispielsweise HTV (Festsilikon), Polyester-PMC, Gummi und andere "teigige" Materialien, an eine Spritzgieß- und/oder Extrudiereinheit.

Die Materialfördervorrichtung 1 weist eine feststehende Konsole 2 auf, auf welcher über zumindest ein durch Bezugszeichen 3 angedeutetes Drehlager ein Einfülltrichter 4 drehbar um eine Drehachse 4a gelagert ist. Entlang einer Mantelinnenfläche 4b des Einfülltrichters 4 ist in einem Schneckenschacht 5 der Konsole 2 eine Förderschnecke 6 um eine Rotationsachse 6a drehbar angeordnet, wobei der Schneckenschacht 5 mit einem Trichterausgang 4c des Einfülltrichters 4 verbunden ist. Die Förderschnecke 6 ist ausgebildet, um das nicht freifließende oder zähfließende Fördermaterial aus dem Einfülltrichter 4 über einen Austrittskanal 7 zu einem Austritt 8 der Konsole 2 zu fördern. Die Förderschnecke 6 wird im gezeigten Ausführungsbeispiel über eine erste Antriebsvorrichtung 9 und der Einfülltrichter 4 über eine zweite Antriebsvorrichtung 10 angetrieben. Die Antriebsvorrichtungen 9, 10 sind durch beispielsweise drehzahlregelbare Elektromotoren gebildet.

Im Bereich des Austrittes 8 ist im in Fig. 1 dargestellten Beispiel ein Druckaufnehmer 11 in einer mit dem Austrittskanal 7 verbundenen Bohrung 12 angeordnet.

Mit Bezugszeichen 13 ist ein im Antriebsweg der Förderschnecke 6 und/oder im Antriebsweg des Einfülltrichters 4 angeordneter Drehmomentaufnehmer bezeichnet.

Die Materialfördervorrichtung 1 weist eine elektronische Steuereinheit 14 auf, welche ausgebildet ist, um zumindest eine Antriebsvorrichtung 9, 10 und/oder zumindest eine - in Fig. 1 und Fig. 2 nicht weiter dargestellte - Wellenkupplung im Antriebsstrang zwischen Antriebsvorrichtung 9 und Förderschnecke 6 und/ oder zwischen Antriebsvorrichtung 10 und Einfülltrichter 4 zu steuern. Die elektronische Steuereinheit 14 ist dabei - je nach Ausführung - mit zumindest einer Antriebsvorrichtung 9, 10 und/oder Wellenkupplung und/oder einem Drucksensor 11 und/oder einem Drehmomentsensor 13 verbunden. In die elektronische Steuereinheit 14 ist beispielsweise eine Speichereinrichtung 15 zur Speicherung eines definierten Grenzwerts des Betriebsparameters und eine Vergleichs- und Auswerteeinrichtung 16 integriert, um einen aktuellen Betriebsparameter mit dem definierten Grenzwert des Betriebsparameters zu vergleichen. Die elektronische Steuereinheit 14 ist ausgebildet, um den Antrieb des Einfülltrichters 4 zu vermindern oder zu unterbrechen, wenn der definierte Grenzwert des Betriebsparameters erreicht oder überschritten wird. Zumindest ein Betriebsparameter kann durch das Antriebsmoment der Förderschnecke 6 oder des Einfülltrichters 4, den Förderdruck der Materialfördervorrichtung 1 oder die Stromaufnahme zumindest einer durch einen Elektromotor gebildeten Antriebsvorrichtung 9, 10 - beispielsweise der ersten Antriebsvorrichtung 9 für die Förderschnecke 6 - gebildet sein.

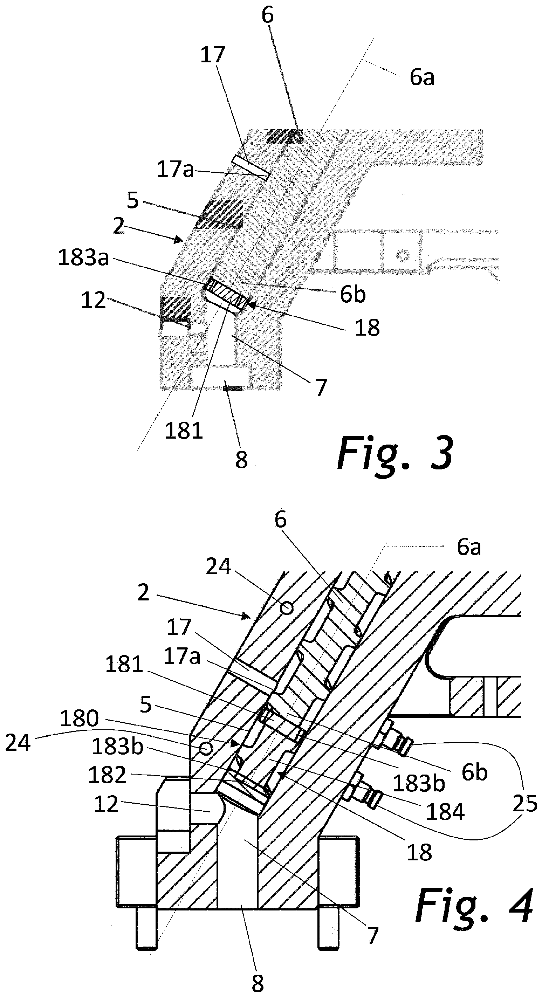

Fig. 3 zeigt eine Konsole 2 einer Materialfördervorrichtung 1 in einer erfindungsgemäßen Ausführungsvariante in einem Schnitt analog zu Fig. 1, wobei die Konsole 2 zumindest einen in den Schneckenschacht 5 einmündenden Medienzuführkanal 17 aufweist. Die Mündung 17a des Medienzuführkanals 17 in den Schneckenschacht 5 ist günstigerweise zwischen dem Trichterausgang 4c des Einfülltrichters 4 und dem Ende 6b der Förderschnecke 6 angeordnet, welches dem Austrittskanal 7 bzw. dem Austritt 8 zugewandt ist.

Über den Medienzuführkanal 17 kann dem nicht freifließendem oder zähfließendem Fördermaterial aktiv zumindest ein flüssiges, teigiges oder rieselfähiges Medium, beispielsweise Vernetzer; Silikonöl und/oder Farbmaterial - insbesondere zumindest eine Farbpaste - zugeführt werden. Um eine gute Durchmischung des Mediums mit dem nicht freifließenden oder zähfließenden Fördermaterial zu erreichen, ist im Bereich der Förderschnecke 6 und/oder stromabwärts der Förderschnecke 6 zumindest eine Mischvorrichtung 18 angeordnet, wobei vorzugsweise die Mischvorrichtung 18 im Schneckenschacht 5 - beispielsweise im Bereich des Endes 6b der Förderschnecke 6 - angeordnet ist. Die Mischvorrichtung 18 ist beispielsweise durch eine mehrere axiale Bohrungen 183a aufweisende Mischscheibe 181 gebildet. Um die Durchmischung zu verbessern, können auch mehrere Mischscheiben 181, 182 in Förderrichtung hintereinander angeordnet sein. Zumindest eine Mischscheibe 181 kann dabei drehfest und starr mit der Förderschnecke 6 verbunden oder schwimmend an der Förderschnecke 6 befestigt sein. Anstelle von axialen Bohrungen 183a oder zusätzlich zu diesen können Ausnehmungen 183b mit verschiedenen Geometrien am Umfang der Mischscheibe 181 angeordnet sein (siehe Fig. 4).

Fig. 4 zeigt ebenfalls eine Konsole 2 einer Materialfördervorrichtung 1 in einer weiteren erfindungsgemäßen Ausführungsvariante in einem Schnitt analog zu Fig. 3, wobei die Konsole 2 ebenfalls einen in den Schneckenschacht 5 einmündenden Medienzuführkanal 17 aufweist, wobei die Mündung 17a des Medienzuführkanals 17 zwischen dem Trichterausgang 4c des Einfülltrichters 4 und dem Ende 6b der Förderschnecke 6 angeordnet, welches dem Austrittskanal 7 bzw. dem Austritt 8 zugewandt ist. Die Mischvorrichtung 18 ist in Fig. 4 als Mischaufsatz 180 am Ende 6b der Förderschnecke 6 ausgebildet, welcher drehfest mit der Förderschnecke 6 verbunden ist. Der Mischaufsatz 180 weist eine erste Mischscheibe 181 und eine zweite Mischscheibe 182 mit Ausnehmungen 183b am Umfang der jeweiligen Mischscheibe 181, 182 auf, wobei zwischen den Mischscheiben 181, 182 - quasi als Verlängerung der Förderschnecke 6 - ein schneckenartiges Mischelement 184 angeordnet ist. Mit anderen Worten ist die Förderschnecke 6 durch die erste Mischscheibe 181 unterbrochen und zweigeteilt.

Es ist dabei möglich, die Förderschnecke 6 nach Erreichen einer gewünschten Dosiermenge mit einer einstellbaren Nachlaufzeit als dynamischer Mischer zu betreiben, um die Durchmischung des Fördermaterials mit dem Farbmaterial zu verbessern.

Günstigerweise kann die Medienzuführung durch den zumindest einen Medienzuführkanal 17 in Abhängigkeit von zumindest einem Förderparameter der Materialfördervorrichtung 1, beispielsweise in Abhängigkeit der Drehzahl der Förderschnecke 6 und/oder des Einfülltrichters 4 und/oder der Stromaufnahme Antriebsvorrichtung 9, 10 der Förderschnecke 6 oder des Einfülltrichters 4, erfolgen. Der Förderparameter kann unterschiedlich oder gleich dem zum Betreiben des Einfülltrichters 4 verwendeten Betriebsparameter der Materialfördervorrichtung 1 sein. Im Falle einer Anwendung an einem Extruder oder bei einer Spritzgießmaschine kann die Medienzuführung in Abhängigkeit vom Dosiervolumen oder dem Schussgewicht beim Spritzgießwerkzeug erfolgen.

Die Zufuhr beispielsweise eines Farbmaterials separat zum Fördermaterial hat den Vorteil, dass als Fördermaterial ein einheitliches transparentes neutrales Material verwendet werden kann. Es braucht somit nicht mehr für jede verwendete Farbe ein farbiges Fördermaterial auf Lager gelegt werden, wodurch die Lagerkapazität für das Fördermaterial wesentlich reduziert werden kann.

Zur Temperierung des Schneckenschachtes 5 und der Förderschnecke 6 können in der Konsole 2 Kühlbohrungen 24 für ein Kühlmedium vorgesehen sein (Fig. 4). Mit Bezugszeichen 25 sind Anschlüsse für nicht weiter dargestellte Zu- und Abfuhrleitung zur Zu- und Abfuhr des Kühlmediums bezeichnet.

Das erfindungsgemäße Verfahren für die geregelte Zuführung von Festsilikon, Polyester-PMC, Gummi und andere "teigige" Materialien, insbesondere in eine Spritzgießmaschine oder Extruder, sieht vor, dass die Kraft oder die Geschwindigkeit der Förderschnecke 6 und/oder des Einfülltrichters 4 geregelt, reduziert oder gestoppt wird, wenn eine definierte Kraftwirkung auf die Materialfördervorrichtung 1 einwirkt. Dadurch wird - vor allem bei härteren Materialien - eine konstantere Ausförderung erreicht, da die Regelung sicherstellt, dass Fördermaterial immer in der Nähe der Förderschnecke 6 zur Verfügung steht. Weiters wird dadurch eine Schonung der Mechanik erreicht und/oder eine kleinere Dimensionierung bei der Auslegung der Mechanik ermöglicht.

Im Folgenden werden drei Ausführungsvarianten des erfindungsgemäßen Verfahrens beschrieben, wobei günstigerweise für die Förderschnecke 6 und den Einfülltrichter 4 separate Antriebsvorrichtungen 9, 10 vorgesehen sind:

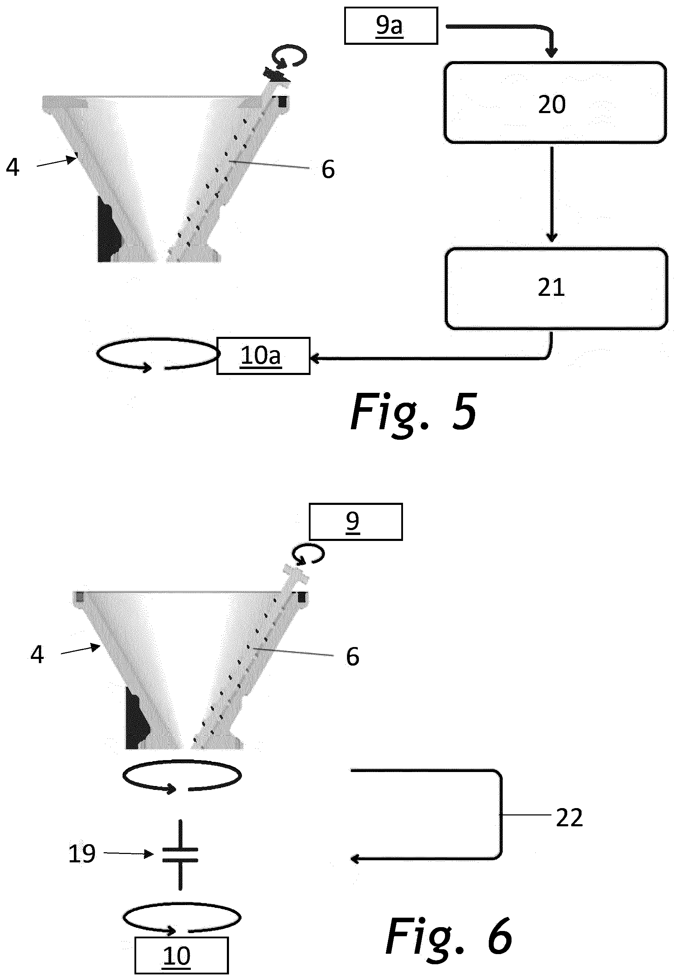

### 1. Variante: Messung der Stromaufnahme (siehe Fig. 5):

Bei dieser Variante wird die Stromaufnahme des Elektromotors 9a der ersten Antriebsvorrichtung 9 der Förderschnecke 6 gemessen und im Schritt 20 (siehe Fig. 5) in der Vergleichs- und Auswerteeinrichtung 16 mit einem in der Speichereinheit 15 abgespeicherten definierten Grenzwert verglichen und ausgewertet. Die Strommessung kann über eine externe Strommesseinheit oder - wenn vorhanden - über einen Frequenzumformer des Elektromotors der Förderschnecke 6 erfolgen. Ist die Stromaufnahme höher als der abgespeicherter definierter Grenzwert, dann lässt sich daraus ableiten, dass der Einfülltrichter 4 das darin im Kreis fördernde Fördermaterial zu stark gegen die Förderschnecke 6 drückt. In diesem Fall wird in Schritt 21 die Geschwindigkeit der Antriebsvorrichtung 10 für den Einfülltrichter 4 geregelt, gedrosselt oder gestoppt. Somit entsteht neben dem mechanischen Schutz der Förderschnecke 6 auch der positive Effekt, dass sichergestellt wird, dass ein bei härteren Materialen vorhandener Materialklumpen in der Nähe der Förderposition der Förderschnecke 6 bleibt und von dort aus verzögerungsfrei abgetragen werden kann.

### 2. Variante: mechanische Rutschkupplung (siehe Fig. 6):

Bei dieser Variante ist eine mechanische Rutschkupplung 19 zwischen der zweiten Antriebsvorrichtung 10 des Einfülltrichters 4 und dem Einfülltrichter 4 selbst verbaut. Wenn das im Einfülltrichter 4 im Kreis geförderte Fördermaterial zu stark gegen die Förderschnecke 6 gedrückt wird, wird in einem in Fig. 6 mit Bezugszeichen 22 angedeuteten Schritt die Rutschkupplung 19 aktiv und vermindert oder trennt das Antriebsdrehmoment für den Einfülltrichter 4 . Dadurch wird der Einfülltrichter 4 langsamer gedreht oder stoppt zur Gänze. Auf diese Weise wird verhindert, dass eine zu starke Kraft auf die Förderschnecke 6 einwirkt.

Somit entsteht neben dem mechanischen Schutz der Förderschnecke 6 auch hier der positive Effekt, dass sichergestellt wird, dass ein bei härteren Materialen vorhandener Materialklumpen in der Nähe der Förderposition der Förderschnecke bleibt und von dort aus verzögerungsfrei abgetragen werden kann.

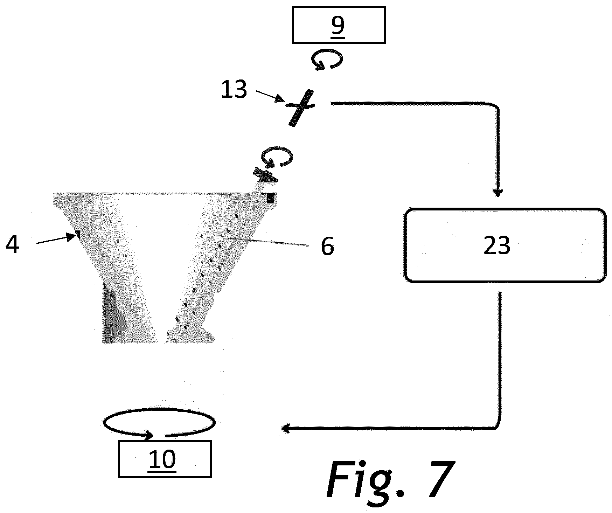

### 3. Variante: Drehmomentaufnehmer (siehe Fig. 7):

Bei dieser Variante wird zwischen der Förderschnecke 6 und der ersten Antriebsvorrichtung 9 ein Drehmomentaufnehmer 13 verbaut, welcher das Drehmoment misst. Wird zu viel Kraft über diesen Drehmomentaufnehmer 13 erkannt, dann erfolgt in Schritt 23 eine Rückmeldung an die zweite Antriebsvorrichtung 10 des Einfülltrichter 4.

In diesem Fall wird die Geschwindigkeit der zweiten Antriebsvorrichtung 10 des Einfülltrichters 4 geregelt, gedrosselt oder gestoppt. Dies kann über Ansteuern des zweiten Elektromotors 10a der zweiten Antriebsvorrichtung 10 oder über Ansteuerung einer - nicht weiter dargestellten - steuerbaren Wellenkupplung im Antriebsstrang zwischen zweiter Antriebsvorrichtung 10 und Einfülltrichters 4 erfolgen.

Somit entsteht neben dem mechanischen Schutz der Förderschnecke 6 auch hier wieder der positive Effekt, dass sichergestellt wird, dass der bei härteren Materialen vorhandene Materialklumpen in der Nähe der Förderposition der Förderschnecke 6 bleibt und von dort aus verzögerungsfrei abgetragen werden kann.

## Patentansprüche

1. Materialfördervorrichtung (1) zum Beschicken zumindest einer Spritzgieß- und/oder Extrudiereinheit mit einem nicht freifließendem oder zähfließenden Fördermaterial, mit einem relativ zu einer Konsole (2) um eine Drehachse (4a) drehbaren Einfülltrichter (4) und einer entlang einer Mantelinnenfläche (4b) des Einfülltrichters (4) drehbar in einem Schneckenschacht (5) der Konsole (2) angeordneten Förderschnecke(6), welche ausgebildet ist um das Fördermaterial vom Einfülltrichter (4) zu einem Austritt (8) zu fördern, wobei der Schneckenschacht (5) mit einem Trichterausgang (4c) des Einfülltrichters (4) verbunden ist, und wobei der Einfülltrichter (4) und die Förderschnecke (6) über zumindest eine Antriebsvorrichtung (9, 10) antreibbar sind, wobei der Einfülltrichter (4) in Abhängigkeit zumindest eines Betriebsparameters der Materialfördervorrichtung (1) betreibbar ist, **dadurch gekennzeichnet, dass** zumindest ein Betriebsparameter ein Antriebsdrehmoment der Förderschnecke (6) ist, wobei vorzugsweise das Antriebsdrehmoment durch zumindest einen im Antriebsweg der Förderschnecke (6) angeordneten Drehmomentaufnehmer (13) ermittelbar ist.

2. Materialfördervorrichtung (1) nach Anspruch 1, **dadurch gekennzeichnet, dass** die Drehbewegung des Einfülltrichters (4) verminderbar oder anhaltbar ist, wenn ein - vorzugsweise oberer - definierter Grenzwert zumindest eines Betriebsparameters erreicht oder überschritten wird.

3. Materialfördervorrichtung (1) nach Anspruch 1 oder 2, **dadurch gekennzeichnet, dass** die Drehbewegung des Einfülltrichters (4) erhöhbar ist, wenn ein - vorzugsweise unterer - definierter Grenzwert zumindest eines Betriebsparameters unterschritten wird.

4. Materialfördervorrichtung (1) nach einem der Ansprüche 1 bis 3, **dadurch gekennzeichnet, dass** die Materialfördervorrichtung (1) zumindest eine elektronische Steuereinheit (14) aufweist, welche ausgebildet ist, um zumindest eine Antriebsvorrichtung (9, 10) und/oder zumindest eine Wellenkupplung im Antriebsstrang zwischen Antriebsvorrichtung (9) und Förderschnecke (6) und/oder zwischen Antriebsvorrichtung (10) und Einfülltrichter (4) zu steuern.

5. Materialfördervorrichtung (1) nach einem der Ansprüche 1 bis 4, **dadurch gekennzeichnet, dass** die Materialfördervorrichtung (1) eine Speichereinrichtung (15) zur Speicherung zumindest eines definierten Grenzwertes des Betriebsparameters und eine Vergleichs- und Auswerteeinrichtung (16), um einen aktuellen Betriebsparameter mit dem definierten Betriebsparameter zu vergleichen, aufweist, wobei vorzugsweise die Speichereinrichtung (15) und/oder die Vergleichs- und Auswerteeinrichtung (16) in die elektronische Steuereinheit (14) integriert ist/sind.

6. Materialfördervorrichtung (1) nach Anspruch 4 oder 5, **dadurch gekennzeichnet, dass** die elektronische Steuereinheit (14) ausgebildet ist, um den Antrieb des Einfülltrichters (4) zu vermindern oder zu unterbrechen, wenn der definierte Grenzwert des Betriebsparameters erreicht oder überschritten wird.

7. Materialfördervorrichtung (1) nach einem der Ansprüche 1 bis 6, **dadurch gekennzeichnet, dass** im Antriebsstrang zwischen Antriebsvorrichtung (10) und Einfülltrichter (4) zumindest eine schaltbare Kupplung oder Rutschkupplung (19) angeordnet ist, welche ausgebildet ist um die Antriebsverbindung zum Einfülltrichter (4) zu unterbrechen, wenn der definierte Grenzwert des Betriebsparameters erreicht oder überschritten wird.

8. Materialfördervorrichtung (1) nach einem der Ansprüche 1 bis 7, **dadurch gekennzeichnet, dass** zumindest ein Betriebsparameter
• ein Antriebsmoment des Einfülltrichters (4) ist, wobei vorzugsweise das Antriebsdrehmoment durch zumindest einen im Antriebsweg des Einfülltrichters (4) angeordneten Drehmomentaufnehmer (13) ermittelbar ist, und/oder
• ein Förderdruck der Materialfördervorrichtung (1) ist, wobei vorzugsweise der Förderdruck durch einen im Bereich des Austrittes (8) angeordneten Druckaufnehmer (11) ermittelbar ist, und/oder
• eine Stromaufnahme der einen Elektromotor (9a, 10a) aufweisenden Antriebsvorrichtung (9, 10) der Förderschnecke (6) oder des Einfülltrichters (4) ist, wobei vorzugsweise die Stromaufnahme durch eine Vergleichs- und Auswerteeinrichtung (16) ermittelbar ist.

9. Materialfördervorrichtung (1) nach einem der Ansprüche 1 bis 8, **dadurch gekennzeichnet, dass** die Förderschnecke (6) über eine erste Antriebsvorrichtung (9) und der Einfülltrichter (4) über eine zweite Antriebsvorrichtung (10) antreibbar sind, wobei vorzugsweise zumindest eine Antriebsvorrichtung (9, 10) einen drehzahlregelbaren Elektromotor aufweist.

10. Materialfördervorrichtung (1) nach einem der Ansprüche 1 bis 9, **dadurch gekennzeichnet, dass** in den Schneckenschacht (5) zumindest ein Medienzuführkanal (17) einmündet, wobei vorzugsweise die Mündung (17a) des Medienzuführkanals (17) in den Schneckenschacht (5) zwischen dem Trichterausgang (4c) und einem dem Austritt (8) zugewandten Ende (6b) der Förderschnecke (6) angeordnet ist.

11. Materialfördervorrichtung (1) nach Anspruch 10, **dadurch gekennzeichnet, dass** im Bereich der Förderschnecke (6) und/oder stromabwärts der Förderschnecke (6) zumindest eine Mischvorrichtung (18) angeordnet ist, wobei vorzugsweise die Mischvorrichtung (18) im Schneckenschacht (5) angeordnet ist.

12. Verfahren zum Beschicken zumindest einer Spritzgieß- und/oder Extrudiereinheit mit einem nicht freifließendem oder zähfließenden Material, mit einer Materialfördervorrichtung (1) mit einem rotierbaren Einfülltrichter (4) mit einer entlang einer Mantelinnenfläche (4b) des Einfülltrichters (4) drehbar angeordneten Förderschnecke (6), wobei der Einfülltrichter (4) und die Förderschnecke (6) über zumindest eine Antriebsvorrichtung (9, 10) angetrieben werden, wobei der Einfülltrichter (4) in Abhängigkeit zumindest eines Betriebsparameters angetrieben wird und die Drehbewegung vermindert oder angehalten wird, wenn ein Grenzwert des Betriebsparameters erreicht oder überschritten wird, nach einem der Ansprüche 1 bis 11, **dadurch gekennzeichnet, dass** als zumindest ein Betriebsparameter ein Antriebsdrehmoment der Förderschnecke (6) gewählt wird, wobei vorzugsweise das Antriebsdrehmoment durch zumindest einen im Antriebsweg der Förderschnecke (6) angeordneten Drehmomentaufnehmer (13) ermittelt wird.

13. Verfahren nach Anspruch 12, **dadurch gekennzeichnet, dass** der Grenzwert des Betriebsparameters vordefiniert und in einem Speichermedium (15) abgespeichert wird, dass ein aktueller Betriebsparameter ermittelt und mit dem vordefinierten Grenzwert des Betriebsparameters verglichen wird, und dass die Drehzahl zumindest einer Antriebsvorrichtung (9, 10) des Einfülltrichters (4) vermindert oder gestoppt wird, wenn der aktuelle Betriebsparameter mindestens dem vordefinierten Grenzwert des Betriebsparameters entspricht.

14. Verfahren nach Anspruch 12 oder 13, **dadurch gekennzeichnet, dass** als zumindest ein Betriebsparameter weiters
• ein Antriebsmoment des Einfülltrichters (4) gewählt wird, wobei vorzugsweise das Antriebsdrehmoment durch zumindest einen im Antriebsweg des Einfülltrichters (4) angeordneten Drehmomentaufnehmer (13) ermittelt wird, und/oder
• ein Förderdruck im Bereich des Austrittes (8) gewählt wird, wobei vorzugsweise der Förderdruck durch einen im Bereich des Austrittes (8) angeordneten Druckaufnehmer (11) gemessen wird, und/oder
• ein Aufnahmestrom der Antriebsvorrichtung (10) der Förderschnecke (6) gewählt wird, wobei vorzugsweise der Aufnahmestrom durch eine Vergleichs- und Auswerteeinrichtung (16) erfasst wird.

15. Verfahren nach einem der Ansprüche 12 bis 14, **dadurch gekennzeichnet, dass** dem nicht freifließendem oder zähfließenden Fördermaterial ein Farbmaterial im Bereich der Förderschnecke (6) zugeführt wird, wobei das nicht freifließende oder zähfließende Fördermaterial und das Farbmaterial in der Förderschnecke (6) und/oder stromabwärts der Förderschnecke (6) vermischt werden.

## Claims

1. Material conveying device (1) for charging at least one injection molding and/or extruding unit with a non-free-flowing or viscous material to be conveyed, having a feed hopper (4) rotatable around an axis of rotation (4a) relative to a console (2) and a conveyor screw (6) arranged in a screw shaft (5) of the console (2) so as to be rotatable along an inner lateral surface (4b) of the feed hopper (4), which is designed to convey the material to be conveyed from the feed hopper (4) to an outlet (8), wherein the screw shaft (5) is connected to a hopper outlet (4c) of the feed hopper (4), and wherein the feed hopper (4) and the conveying screw (6) are drivable via at least one drive device (9, 10), wherein the feed hopper (4) is operable as a function of at least one operating parameter of the material conveying device (1), **characterised in that** at least one operating parameter is a drive torque of the conveyor screw (6), wherein preferably the drive torque is determinable by at least one torque transducer (13) arranged in the drive path of the conveyor screw (6).

2. Material conveying device (1) according to claim 1, **characterised in that** the rotational movement of the feed hopper (4) can be reduced or stopped when a defined limit value, preferably an upper limit value, of at least one operating parameter is reached or exceeded.

3. Material conveying device (1) according to claim 1 or 2, **characterised in that** the rotational movement of the feed hopper (4) can be increased if a, preferably lower, defined limit value of at least one operating parameter is undershot.

4. Material conveying device (1) according to one of claims 1 to 3, **characterised in that** the material conveying device (1) has at least one electronic control unit (14) which is designed to control at least one drive device (9, 10) and/or at least one shaft coupling in the drive train between the drive device (9) and the conveying screw (6) and/or between the drive device (10) and the feed hopper (4).

5. Material conveying device (1) according to one of claims 1 to 4, **characterised in that** the material conveying device (1) has a memory device (15) for storing at least one defined limit value of the operating parameter and a comparison and evaluation device (16) for comparing a current operating parameter with the defined operating parameter, wherein preferably the memory device (15) and/or the comparison and evaluation device (16) are integrated in the electronic control unit (14).

6. Material conveying device (1) according to claim 4 or 5, **characterised in that** the electronic control unit (14) is designed to reduce or interrupt the drive of the feed hopper (4) when the defined limit value of the operating parameter is reached or exceeded.

7. Material conveying device (1) according to one of claims 1 to 6, **characterised in that** at least one switchable clutch or slip clutch (19) is arranged in the drive train between the drive device (10) and the feed hopper (4), which is designed to interrupt the drive connection to the feed hopper (4) when the defined limit value of the operating parameter is reached or exceeded.

8. Material conveying device (1) according to one of claims 1 to 7, **characterised in that** at least one operating parameter
• is a drive torque of the feed hopper (4), wherein preferably the drive torque can be determined by at least one torque transducer (13) arranged in the drive path of the feed hopper (4), and/or
• is a conveying pressure of the material conveying device (1), wherein preferably the conveying pressure can be determined by a pressure transducer (11) arranged in the region of the outlet (8), and/or
• is a current consumption of the drive device (9, 10), which has an electric motor (9a, 10a), of the conveying screw (6) or of the feed hopper (4), wherein preferably the current consumption is determinable by a comparison and evaluation device (16).

9. Material conveying device (1) according to one of claims 1 to 8, **characterised in that** the conveying screw (6) can be driven by a first drive device (9) and the feed hopper (4) can be driven by a second drive device (10), wherein preferably at least one drive device (9, 10) has a speed-controllable electric motor.

10. Material conveying device (1) according to one of claims 1 to 9, **characterised in that** at least one media supply channel (17) opens into the screw shaft (5), wherein preferably the opening (17a) of the media supply channel (17) into the screw shaft (5) is arranged between the hopper outlet (4c) and an end (6b) of the conveying screw (6) facing the outlet (8).

11. Material conveying device (1) according to claim 10, **characterised in that** at least one mixing device (18) is arranged in the region of the conveying screw (6) and/or downstream of the conveying screw (6), wherein preferably the mixing device (18) is arranged in the screw shaft (5).

12. Method for charging at least one injection molding and/or extruding unit with a non-free-flowing or viscous material, having a material conveying device (1) with a rotatable feed hopper (4) having a conveying screw (6) arranged rotatably along an inner lateral surface (4b) of the feed hopper (4), wherein the feed hopper (4) and the conveyor screw (6) are driven by means of at least one drive device (9, 10), wherein the feed hopper (4) is driven as a function of at least one operating parameter and the rotary movement is reduced or stopped when a limit value of the operating parameter is reached or exceeded, according to one of claims 1 to 11, **characterised in that** a drive torque of the conveyor screw (6) is selected as at least one operating parameter, wherein preferably the drive torque is determined by at least one torque transducer (13) arranged in the drive path of the conveyor screw (6).

13. Method according to claim 12, **characterised in that** the limit value of the operating parameter is predefined and stored in a memory device (15), **in that** a current operating parameter is determined and compared with the predefined limit value of the operating parameter, and **in that** the speed of at least one drive device (9, 10) of the feed hopper (4) is reduced or stopped if the current operating parameter corresponds at least to the predefined limit value of the operating parameter.

14. Method according to claim 12 or 13, **characterised in that** further, as at least one operating parameter,
• a drive torque of the feed hopper (4) is selected, wherein the drive torque is preferably determined by at least one torque transducer (13) arranged in the drive path of the feed hopper (4), and/or
• a conveying pressure in the region of the outlet (8) is selected, wherein preferably the conveying pressure is measured by a pressure transducer (11) arranged in the region of the outlet (8), and/or
• an input current of the drive device (10) of the conveyor screw (6) is selected, wherein preferably the input current is detected by a comparison and evaluation device (16).

15. Method according to one of claims 12 to 14, **characterised in that** that a coloring material is supplied to the non-free-flowing or viscous conveying material in the region of the conveying screw (6), wherein the non-free-flowing or viscous conveying material and the coloring material are mixed in the conveying screw (6) and/or downstream of the conveying screw (6).

## Revendications

1. Installation (1) de transport de matériau pour l'alimentation d'au moins une unité de moulage par injection et/ou d'extrusion comprenant un matériau à transporter qui n'est pas à écoulement libre ou à écoulement visqueux, comprenant une trémie (4) de remplissage pouvant tourner autour d'un axe (4a) de rotation par rapport à une console (2) et une vis (6) transporteuse qui est montée tournante, le long d'une surface (4b) latérale intérieure de la trémie (4) de remplissage, dans un puits (5) hélicoïdal de la console (2) et qui est constitué pour transporter le matériau à transporter de la trémie (4) de remplissage à une sortie (8), dans lequel le puits (5) hélicoïdal communique avec une sortie (4c) de la trémie (4) de remplissage et dans lequel la trémie (4) de remplissage et la vis (6) transporteuse peuvent être entraînées par au moins un dispositif (9, 10) d'entraînement, dans lequel la trémie (4) de remplissage peut fonctionner en fonction d'au moins un paramètre de fonctionnement de l'installation (1) de transport de matériau, **caractérisée en ce qu'au** moins un paramètre de fonctionnement est un couple d'entraînement de la vis (6) transporteuse, dans lequel de préférence le couple d'entraînement peut être déterminé par au moins un enregistreur (13) de couple monté dans le chemin d'entraînement de la vis (6) transporteuse.

2. Installation (1) de transport de matériau suivant la revendication 1, **caractérisée en ce que** le mouvement de rotation de la trémie (4) de remplissage peut être amoindri ou arrêté si une valeur limite définie - de préférence supérieure - d'au moins un paramètre de fonctionnement est atteinte ou dépassée.

3. Installation (1) de transport de matériau suivant la revendication 1 ou 2, **caractérisée en ce que** le mouvement de rotation de la trémie (4) de remplissage peut être augmenté si on passe en dessous d'une valeur limite définie - de préférence inférieure - d'au moins un paramètre de fonctionnement.

4. Installation (1) de transport de matériau suivant l'une des revendications 1 à 3, **caractérisée en ce que** l'installation (1) de transport de matériau a au moins une unité (14) électronique de commande, qui est constituée pour commander au moins un dispositif (9, 10) d'entraînement et/ou au moins un accouplement d'arbres dans la chaine cinématique entre le dispositif (9) d'entraînement et la vis (6) transporteuse et/ou entre le dispositif (10) d'entraînement et la trémie (4) de remplissage.

5. Installation (1) de transport de matériau suivant l'une des revendications 1 à 4, **caractérisée en ce que** l'installation (1) de transport de matériau a un dispositif (15) de mémoire pour la mise en mémoire d'au moins une valeur limite définie du paramètre de fonctionnement et un dispositif (16) de comparaison et d'évaluation pour comparer un paramètre de fonctionnement en cours à un paramètre de fonctionnement défini, dans lequel de préférence le dispositif (15) de mémoire et/ou le dispositif (16) de comparaison et d'évaluation est/sont intégrés dans l'unité (14) électronique de commande.

6. Installation (1) de transport de matériau suivant la revendication 4 ou 5, **caractérisée en ce que** l'unité (14) électronique de commande est constituée pour diminuer ou interrompre l'entraînement de la trémie (4) de remplissage si la valeur limite définie du paramètre de fonctionnement est atteinte ou dépassée.

7. Installation (1) de transport de matériau suivant l'une des revendications 1 à 6, **caractérisée en ce que** dans la chaîne cinématique entre le dispositif (10) d'entraînement et la trémie (4) de remplissage, est monté au moins un accouplement pouvant être commuté ou un accouplement (19) à glissement, qui est constitué pour interrompre la liaison d'entraînement à la trémie (4) de remplissage si la valeur limite définie du paramètre de fonctionnement est atteinte ou dépassée.

8. Installation (1) de transport de matériau suivant l'une des revendications 1 à 7, **caractérisée en ce qu'**au moins un paramètre de fonctionnement
• est un couple d'entraînement de la trémie (4) de remplissage, dans lequel de préférence le couple d'entraînement peut être déterminé par au moins un enregistreur (13) de couple monté dans le chemin d'entraînement de la trémie (4) de remplissage, et/ou
• est une pression de refoulement de l'installation (1) de transport de matériau, dans lequel de préférence la pression de refoulement peut être déterminée par un enregistreur (11) de pression monté dans la zone de la sortie (8), et/ou
• est un dispositif (9, 10) d'entraînement, ayant une absorption du courant électrique d'un moteur (9a, 10a) électrique, de la vis (6) transporteuse ou de la trémie (4) de remplissage, dans lequel de préférence l'absorption du courant peut être déterminée par un dispositif (16) de comparaison et d'évaluation.

9. Installation (1) de transport de matériau suivant l'une des revendications 1 à 8, **caractérisée en ce que** peuvent être entraînées la vis (6) transporteuse par un premier dispositif (9) d'entraînement et la trémie (4) de remplissage par un deuxième dispositif (10) d'entraînement, dans lequel de préférence au moins un dispositif (9, 10) d'entraînement a un moteur électrique à vitesse de rotation réglable.

10. Installation (1) de transport de matériau suivant l'une des revendications 1 à 9, **caractérisée en ce que** dans le puits (5) hélicoïdal débouche au moins un conduit (17) d'apport de fluide, dans lequel de préférence l'embouchure (17a) du conduit (17) d'apport de fluide dans le puits (5) hélicoïdal est disposée entre la sortie (4c) de la trémie et une extrémité (6b), tournée vers la sortie (8), de la vis (6) transporteuse.

11. Installation (1) de transport de matériau suivant la revendication 10, **caractérisée en ce que** dans la zone de la vis (6) de transport et/ou en aval de la vis (6) transporteuse est disposé au moins un dispositif (18) de mélange, dans lequel de préférence le dispositif (18) de mélange est disposé dans le puits (5) hélicoïdal.

12. Procédé d'alimentation en un matériau ne s'écoulant pas librement ou de manière visqueuse d'au moins une unité de moulage par injection et/ou d'extrusion, comprenant une installation (1) de transport de matériau ayant une trémie (4) de remplissage pouvant tourner, comprenant une vis (6) transporteuse montée tournante le long d'une surface (4b) intérieure latérale de la trémie (4) de remplissage, dans lequel la trémie (4) de remplissage et la vis (6) transporteuse sont entraînées par au moins un dispositif (9, 10) d'entraînement, dans lequel on entraîne la trémie (4) de remplissage en fonction d'au moins un paramètre de fonctionnement et on diminue ou arrête le mouvement de rotation si une valeur limite du paramètre de fonctionnement est atteinte ou dépassée suivant l'une des revendications 1 à 11, **caractérisé en ce que** l'on choisit, comme au moins un paramètre de fonctionnement, un couple d'entraînement de la vis (6) transporteuse, dans lequel de préférence on détermine le couple d'entraînement par au moins un enregistreur (13) de couple d'entraînement monté dans le chemin d'entraînement de la vis (6) transporteuse.

13. Procédé suivant la revendication 12, **caractérisé en ce que** l'on définit à l'avance la valeur limite du paramètre de fonctionnement et on la met en mémoire dans un support (15) de mémoire **en ce que** l'on détermine un paramètre de fonctionnement en cours et on le compare à la valeur limite définie à l'avance du paramètre de fonctionnement et **en ce que** l'on diminue on arrête la vitesse de rotation d'au moins un dispositif (9, 10) d'entraînement de la trémie (4) de remplissage si le paramètre de fonctionnement en cours correspond au moins à la valeur limite définie à l'avance du paramètre de fonctionnement.

14. Procédé suivant la revendication 12 ou 13, **caractérisé en ce que,** comme paramètre de fonctionnement, en outre
• on choisit un couple d'entraînement de la trémie (4) de remplissage, dans lequel de préférence on détermine le couple d'entraînement par au moins un enregistreur (13) de couple d'entraînement monté dans le chemin d'entraînement de la trémie (4) de remplissage, et/ou
• on choisit une pression de refoulement dans la zone de la sortie (8), dans lequel de préférence on mesure la pression de refoulement par un enregistreur (11) de pression monté dans la zone de la sortie (8), et/ou
• on choisit un courant électrique absorbé du dispositif (10) d'entraînement de la vis (6) transporteuse, de préférence on détecte le courant électrique absorbé par un dispositif (16) de comparaison et/ou d'évaluation.

15. Procédé suivant l'une des revendications 12 à 14, **caractérisé en ce que** l'on apporte au matériau à transporter ne s'écoulant pas librement ou à écoulement visqueux une matière colorée dans la zone de la vis (6) transporteuse, dans lequel on mélange le matériau à transporter ne s'écoulant pas librement ou à écoulement visqueux et la matière colorée dans la vis (6) transporteuse et/ou en aval de la vis (6) transporteuse.
